# EUROPEAN PATENT APPLICATION

(11) **EP 1 602 677 A1**
(43) Date of publication of application: **07.12.2005**
(21) Application number: 04718406.4
(22) Date of filing: 08.03.2004
(51) Int. Cl.: C08G 59/02

(54) **FLUOROCARBON-MODIFIED EPOXY RESIN**

(30) Priority: 07.03.2003 JP 2003062458
(71) Applicant: DAICEL CHEMICAL INDUSTRIES, LTD., Sakai-shi, Osaka 590-0905 (JP)
(72) Inventor: OKAZAKI, Akira, Ohtake-shi, Hiroshima 739-0651 (JP)
(74) Representative: Grünecker, Kinkeldey, Stockmair & Schwanhäusser Anwaltssozietät
(86) International application number: PCT/JP2004/002960
(87) International publication number: WO 2004/078821

(57) **Abstract**

The present invention is a fluorocarbon-modified epoxy resin obtained by allowing 4-vinylcyclohexene 1-oxide to react with a fluorocarbon compound having an active-hydrogen-containing group and epoxidizing the vinyl group of the resultant fluorocarbon-modified polyether compound, which is a polyfunctional alicyclic epoxy resin improved in heat resistance and hygroscopicity and having an oxycyclohexane skeleton.

## Description

### TECHNICAL FIELD

The present invention relates to a fluorocarbon-modified epoxy resin which provides a cured product having excellent heat resistance, and moisture-resistance, little internal stress, and a satisfactory achromatic transparency, and which is solid at normal temperature.

### BACKGROUND ART

The most commonly used epoxy resin is a bisphenol A-type epoxy resin which is produced by a reaction between bisphenol phenol A and epichlorohydrin.

This resin provides a wide variety of products including liquid to solid products according to the polymerization degree, and the reactivity thereof is as high as the resin can be cured with a polyamine at normal temperature.

Although a cured product of the resin has excellent water resistance and toughness, it has some faults such as poor weatherability and electric properties, and low heat distortion temperature.

Therefore, a novolak phenol-type and novolak cresol-type epoxy resins are used as resins for sealing for use in IC, LSI, VLSI, and the like. However, it is become a problem that chlorine contained in those resins deteriorates the electric properties of the IC, LSI, VLSI, or the like.

Meanwhile, an alicyclic epoxy resin is an epoxy resin which contains no chlorine and has excellent electric properties and heat resistance.

As commercially available alicyclic epoxy resins, for example, EHPE series (disclosed in JP-B 63-31493, JP-B 04-10471, JP-B 06-25194, JP-B 07-25864, etc.) are supplied by Daicel Chemical Industries, Ltd., and those are produced by epoxidizing substituent vinyl groups in a polyether compound having a skeleton, which is obtained by the ring opening polymerization of the oxirane ring of cyclohexene oxide having a substituent including a vinyl group such as 4-vinyl cyclohexene-1-oxide, and are widely used as a insulating sealant for electronics, a curing agent for powder coatings or the like, and a binder for glass fibers. Those have highly reactive epoxy groups, and provide a cured product having a high Tg and high transparency. Among the EHPE series, EHPE 3150 is a solid epoxy resin and easy to handle. However, a cured product of the EHPE 3150 has higher water-absorbing property than cured products of bisphenol A-type epoxy resin and novolak-type epoxy resin, which needs to be improved. As an invention for improving this, JP-A 08-290572 discloses a blend of an epoxy resin such as the EHPE series, a fluorocarbon compound having an active hydrogen-containing group, and a curing agent and a cured product thereof.

As described above, a cured product of the EHPE 3150 itself needs to be further improved in the electric properties, and it cannot be necessarily said that it is satisfactory for use as an insulating sealant for electronics such as a sealant for a semiconductor. Then, it has been found (JP-B 07-25864) that water-absorbing property is improved by epoxidizing substituent vinyl groups of the alicyclic epoxy resin classified in the above EHPE series except for leaving partial vinyl groups (that is, the degree of epoxidization is relatively reduced). However, it was also found that the obtained resin has new problems that this epoxy resin has a low softening point and is very easy to cause blocking at normal temperature, and that Tg of a curedproduct thereof extremely decreases. Further, JP-A 02-28211 made an attempt to improve water-absorbing property by adding an organopolysiloxane compound to the substituent vinyl groups remaining in the alicyclic epoxy resin classified in the above EHPE series. With this method, water-absorbing property is improved to a certain extent but heat resistance is not satisfactory. Still further, in JP-A 03-123775, anti-blocking properties are improved by using a small amount of a compound having two epoxy groups in combination with the above 4-vinylcyclohexene-1-oxide of the above EHPE series to form a crosslinked structure in the molecule so as to increase the softening point. However, with this method, the water-absorbing property of a cured product is not so improved. The technology disclosed by the above JP-A 08-290572 involves a problem that it is difficult to choose suitable composition because a fluorocarbon compound having an active hydrogen-containing group to be blended may occasionally bleed out from the cured product.

### DISCLOSURE OF THE INVENTION

The inventor of the present invention has found that problems such as the blocking of an epoxy resin at normal temperature and the water-absorbing property of a cured product of the resin can be solved by epoxidizing the residual vinyl group with an epoxidizing agent after the ring opening polymerization of an epoxy group constituting an epoxy compound including 4-vinylcyclohexene-1-oxide alone and optionally in combination with the other epoxy compounds, in the presence of a fluorocarbon compound having an active hydrogen-containing group as an initiator. The present invention has been accomplished based on this finding.

That is, the first aspect of the present invention provides a fluorocarbon-modified epoxy resin prepared by epoxidizing a vinyl group of a fluorocarbon-modified polyether compound obtained by allowing an epoxy group of 4-vinylcyclohexene-1-oxide to react with an active hydrogen-containing group of a fluorocarbon compound having the active hydrogen-containing group.

The second aspect of the present invention provides the fluorocarbon-modified epoxy resin according to the first aspect of the present invention, in which the fluorocarbon compound having an active hydrogen-containing group is a compound represented by the following formula (1).

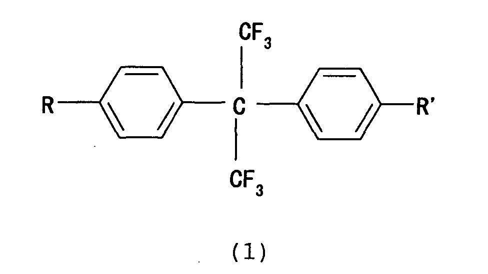

### [In the formula (1), R and R' are each a group having an active hydrogen]

The third aspect of the present invention provides the fluorocarbon-modified epoxy resin according to the second aspect of the present invention, in which the fluorocarbon compound having an active hydrogen-containing group represented by the formula (1) is BIS-AF[2,2-bis(4-hydroxyphenyl)-hexafluoropropane] or BIS-B-AF[2,2-bis(4-carboxyphenyl)-hexafluoropropane].

The fourth aspect of the present invention provides the fluorocarbon-modified epoxy resin according to any one of the first to the third aspects of the present invention, in which a Lewis acid is used as a catalyst for a reaction between 4-vinylcyclohexene-1-oxide and the fluorocarbon compound having an active hydrogen-containing group.

The fifth aspect of the present invention provides the fluorocarbon-modified epoxy resin according to the fourth aspect of the present invention, in which the Lewis acid is a BF₃ complex.

The sixth aspect of the present invention provides the fluorocarbon-modified epoxy resin according to any one of the first to fifth aspects of the present invention, in which the epoxidizing agent for epoxidizing the vinyl group of the fluorocarbon-modified polyether compound is an organic percarboxylic acid.

The seventh aspect of the present invention provides the fluorocarbon-modified epoxy resin according to the sixth aspect of the present invention, in which the water content of the organic percarboxylic acid is 0.8% by weight or less.

The eighth aspect of the present invention provides the fluorocarbon-modified epoxy resin according to the sixth or seventh aspect of the present invention, in which the organic percarboxylic acid is peracetic acid.

The ninth aspect of the present invention provides the fluorocarbon-modified epoxy resin according to the eighth aspect of the present invention, in which peracetic acid is an ethyl acetate solution.

The tenth aspect of the present invention provides the fluorocarbon-modified epoxy resin according to any one of the first to the ninth aspects of the present invention, in which the content of oxirane oxygen is 1.0 to 10% by weight.

### BRIEF DESCRIPTION OF THE DRAWINGS

Fig. 1 is a ¹H-NMR chart of a fluorocarbon compound having active hydrogen used in Synthesis Example 1.
Fig. 2 is a ¹H-NMR chart of a fluorocarbon-modified polyether compound obtained in Synthesis Example 1.
Fig. 3 is a ¹H-NMR chart of the fluorocarbon-modified epoxy resin of the present invention obtained in Synthesis Example 1.

### BEST MODE FOR CARRYING OUT THE INVENTION

Embodiments of the present invention will be described hereinunder.

A fluorocarbon-modified polyether compound which is a precursor of the fluorocarbon-modified epoxy resin of the present invention can be obtained by allowing the above fluorocarbon compound having an active hydrogen-containing group to react with 4-vinylcyclohexene-1-oxide and, optionally, other compounds each having at least one epoxy group in the presence of a catalyst. In the fluorocarbon compound represented by the formula (1), R and R' which are a group having an active hydrogen are each OH or COOH, or OH or COOH which are connected to a fluorocarbon unit having 1 to 9 carbon atoms (specifically, -C(CF₃)₂- etc.).

In the first stage of the above reaction, the molecular weight can be adjusted by changing the reaction ratio of the number of epoxy groups in 4-vinylcyclohexene-1-oxide, and optionally the other compounds each having at least one epoxy group with respect to the number of the hydroxyl groups or carboxyl groups in the above fluorocarbon compound having an active hydrogen.

Specifically, in order to achieve heat resistance and low water absorptivity, it is preferred that 4-vinylcyclohexene-1-oxide and, optionally, other compounds each having at least one epoxy group totally in proportion of 3 to 8 pieces of epoxy groups should be reacted with one hydroxyl group or carboxyl group. When the number of the epoxy groups is smaller than 3, the number of epoxy groups in one molecule is so small that crosslinking at the time of curing becomes weak and when the number of epoxy groups is 9 or more, a reduction in water-absorbing property and improvement on heat resistance by inserting fluorocarbon into the epoxy resin become small.

4-vinylcyclohexene-1-oxide and the compounds each having at least one epoxy group are reacted in an amount of 1 to 100% by weight and an amount of 99 to 0% by weight, respectively. When the amount of 4-vinylcyclohexen-1-oxide is 1% by weight or smaller, the feature of the cyclohexene skeleton is not obtained. When the compound having at least one epoxy group is a compound having two or more epoxy groups, the amount of the compound is smaller than 10% by weight, preferably smaller than 5% by weight, more preferably smaller than 3% by weight based on the total of 4-vinylcyclohexene-1-oxide and the compound having one epoxy group other than 4-vinylcyclohexene-1-oxide. An amount of the compound having 2 or more epoxy groups of larger than 10% by weight is not preferable because a crosslinking structure is produced and the obtained product gels.

Examples of the optional epoxy compound having at least one epoxy group include: aliphatic epoxy compounds such as glycidyl methacrylate and α-olefin oxide; alicyclic epoxy compounds such as epoxidized tetrahydrobenzyl alcohol, 3, 4-epoxycyclohexyl methyl (meth)acrylate, cyclohexene oxide, dipentene diepoxy, and 3,4-epoxycyclohexyl methyl-3,4-epoxycyclohexane carboxylate; and aromatic epoxy compounds such as styrene oxide. Out of those, alicyclic epoxy compounds are preferred.

In the present invention, the fluorocarbon compound having an active hydrogen-containing group which serves as an initiator for the ring opening reaction of the epoxy group has a hydroxyl group or carboxyl group in the molecule.

Examples of the fluorocarbon compound are shown by the following chemical formulae. In the following general formulae, "n" is generally 1 to 20.

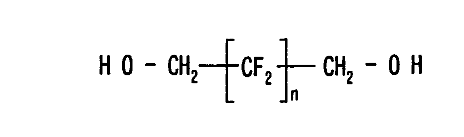

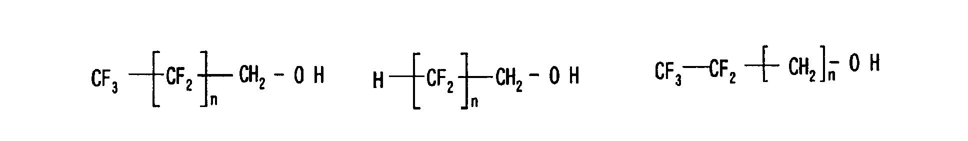

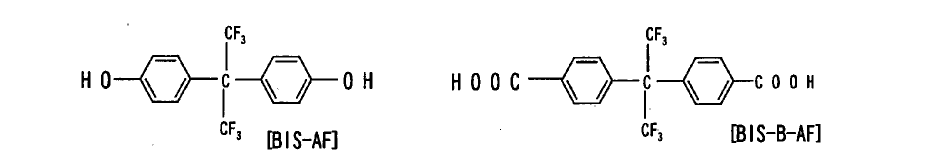

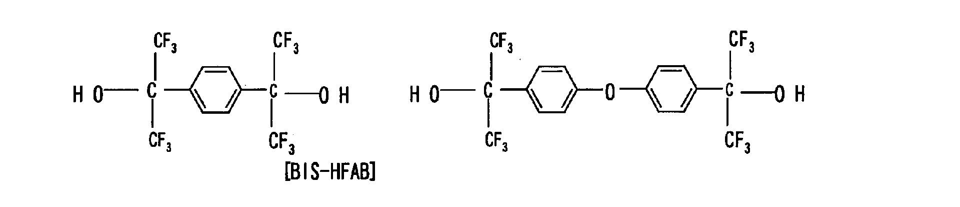

Out of those compounds, to obtain a fluorocarbon-modified epoxy resin which has excellent heat resistance and hygroscopicity, only rarely generates internal stress, and is achromatic, transparent, and solid at normal temperature as interest of the present invention, BIS-AF and BIS-B-AF of the formulae (1) in which the group having active hydrogen is OH or COOH are the best suited. When, for example, a fluorine-substituted aliphatic alcohol such as 1H,1H,5H-octafluoro-1-pentanol [OFP] is used as an initiator, blocking may occasionally occur at normal temperature because the obtained epoxy resin has a low softening point.

For example, when BIS-AF which is a fluorocarbon compound having a preferred active hydrogen-containing group is allowed to react with 4-vinylcyclohexne-1-oxide in the first stage of the reaction, a fluorocarbon-modified polyether compound represented by the following general formula (2) is obtained.

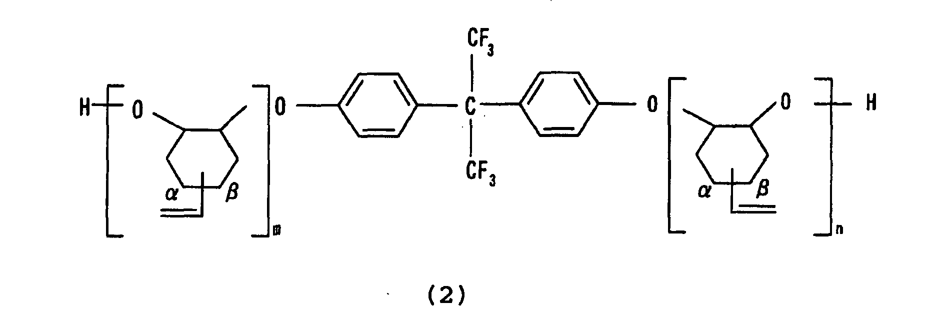

In the formula, "m + n" is the number of moles of 4-vinylcyclohexene-1-oxide subjected to ring opening polymerization based on 1 mol of BIS-AF. The vinyl group in the formula is bonded to the α- or β-position shown in the formula.

In the second stage of the reaction the fluorocarbon-modified epoxy compound of the present invention represented by the following general formula (3) is obtained by epoxidizing the fluorocarbon-modified polyether compound represented by the above general formula (2) with an organic peroxide or the like.

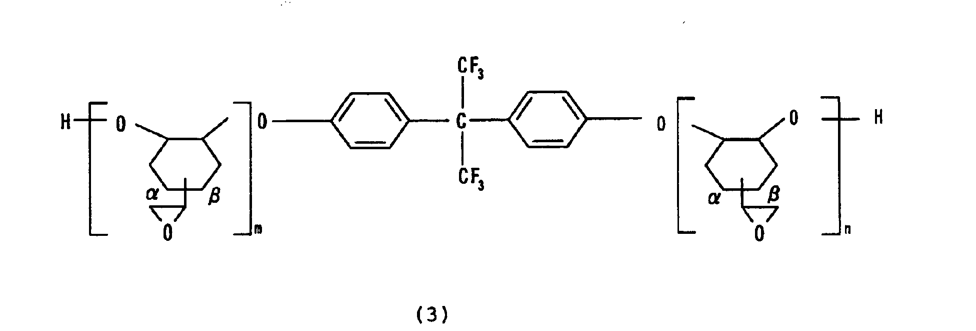

In the formula, "m + n" is the number of moles of 4-vinylcyclohexene-1-oxide subjected to ring opening polymerization based on 1 mol of BIS-AF. The epoxy group in the formula is bonded to the α- or β-position shown in the formula.

Even when the above 2,4-bis(2-hydroxy-2-hexafluoropropyl) benzene [BIS-HFAB] is used as the fluorocarbon compound having an active hydrogen-containing group, in a reaction between 4-vinylcyclohexene-1-oxide and the fluorocarbon compound having an active hydrogen-containing group for the synthesis of a fluorocarbon-modified polyether compound which is the first stage of the reaction, the ring opening polymerization of the epoxy group may be occasionally impossible.

The cause that the ring opening polymerization of the epoxy group may be occasionally impossible is considered to be that oil repellency is too high due to two CF₃ groups adjacent to OH or when a Lewis acid such as a BF₃ complex is used as a catalyst, it may not exhibit its catalytic function fully as the compound itself has relatively high acidity.

Examples of the catalyst used in the first stage of the reaction for the ring opening polymerization of the epoxy group in 4-vinylcyclohexene-1-oxide and, optionally, other epoxy compounds each having at least one epoxy group in combination with the initiator include cationic polymerization catalysts including: Lewis acids such as BF₃, ZnCl₂, AlCl₃, and SnCl₄ or complexes thereof; organic metal compounds such as triethyl aluminum and diethyl zinc; and alumichelate compounds. Out of those catalysts, Lewis acids are preferred and BF₃ etherate is particularly preferred.

The amount of the catalyst, which differs according to its type, is 0.01 to 10% by weight, preferably 0.1 to 5% by weight based on the starting material.

The reaction temperature is -20 to 200°C, and preferably 0 to 120°C. The reaction may be also carried out by using a solvent. The solvent is preferably a solvent having no active hydrogen, as exemplified by ketones such as acetone, methyl ethyl ketone, and methyl isobutyl ketone; aromatic hydrocarbons such as benzene, toluene, and xylene; aliphatic hydrocarbons such as hexane and cyclohexane; and ester-based solvent such as ethyl acetate.

The polyether compound having a vinyl group side chain with the structure of the above formula (2) and obtained in the first stage of the reaction is epoxidized with an oxidizing agent such as peracids or hydroperoxides in the second stage of the reaction to obtain the fluorocarbon-modified epoxy resin of the present invention. The obtained fluorocarbon-modified epoxy resin of the present invention is a compound represented by, for example, the above formula (3).

Examples of the peracids include organic percarboxylic acids, specifically, performic acid, peracetic acid, perbenzoic acid, and trifluoroperacetic acid. Out of the percarboxylic acids, what is obtained by the oxidation of corresponding aldehyde with air or oxygen is preferred because water content thereof is a low, specifically, 0.8% by weight or less and increases the epoxidization rate of the fluorocarbon-modified epoxy resin of the present invention. Out of the organic percarboxylic acids, peracetic acid is a preferred epoxidizing agent as it can be easily acquired industrially at a low cost and has high stability.

Examples of the hydroperoxide include hydrogen peroxide, tertiary-butyl hydroperoxide, and cumene hydroperoxide or the like.

A catalyst may be optionally for epoxidation.

In the case of the peracids, for example, an alkali such as sodium carbonate or an acid such as sulfuric acid may be used as the catalyst.

In the case of the hydroperoxides, a catalytic effect can be obtained by using a mixture of tungstic acid and caustic soda, in combination with hydrogen peroxide, organic acid in combination with hydrogen peroxide, or molybdenum hexacarbonyl in combination with tertiary-butyl hydroperoxide.

The epoxidation reaction is carried out by adjusting the use of a solvent and the reaction temperature in accordance with the apparatus and the physical properties of raw materials.

The usable reaction temperature range is determined according to the reactivity of the epoxidizing agent in use.

When peracetic acid which is a preferred epoxidizing agent is used, the reaction temperature is preferably 0 to 70°C.

When the reaction temperature is 0°C or lower, the reaction slows down and when the reaction temperature exceeds 70°C, the decomposition of peracetic acid occurs.

When a tertiary-butyl hydroperoxide/molybdenum dioxide diacetyl acetonate-based epoxidizing agent which is an example of a hydroperoxide is used, the reaction temperature is preferably 20 to 150°C for the same reason as above. A solvent may be used for the reduction in the viscosity of raw materials and stabilization by the dilution of the epoxidizing agent.

In the case of peracetic acid, an aromatic compound, ether compound, ester compound, ketone compound, or the like may be used as a solvent.

The charge molar ratio of the epoxidizing agent to the vinyl group of the fluorocarbon-modified polyether compound derived from 4-vinylcyclohexene-1-oxide is set to 0. 9 times or more. In the case of peracetic acid, the charge molar ratio is preferably set to 0. 95 to 1.2. The compound of interest can be taken out from a reaction crude solution by ordinary means in chemical engineering such as concentration.

As described above, in the epoxidized fluorocarbon-modified epoxy resin of the present invention, the content of oxirane oxygen (also called "concentration of oxirane oxygen") is generally 1.0 to 10% by weight.

### Examples

The following examples are provided for the purpose of further illustrating the present invention but are in no way to be taken as limiting.

### <Synthesis Example 1>

After 67.2 g (0.2 mol) of BIS-AF [2,2-bis(4-hydroxyphenyl)-hexafluoropropane], 248 g (2 mols) of 4-vinylcyclohexene-1-oxide, and 120 g of ethyl acetate were mixed and dissolved together, 38 g of a 15% ethyl acetate solution of BF₃·diethyl ether was added dropwise to the resulting solution at 40°C over 3 hours.

160 g of ethyl acetate was added to the obtained reaction crude solution, the resulting solution was rinsed with water, and the ethyl acetate layer was concentrated to obtain 310 g of a fluorocarbon-modified polyether compound.

Further, 300 g of this fluorocarbon-modified polyether compound was dissolved in 300 g of ethyl acetate and the solution was charged into a reactor, and then 152 g of peracetic acid (molar ratio to the vinyl group was 1.05) was added dropwise as 506 g of ethyl acetate solution to the resulting solution at 60°C over 3 hours. After the end of dropwise addition, the mixture was additionally aged at 60°C for 2 hours.

Thereafter, 400 g of ethyl acetate was added again, and the resulting mixture was rinsed with distilled water and the ethyl acetate layer was concentrated to obtain a fluorocarbon-modified epoxy resin having the following physical properties.

Chemical analysis confirmed that the resin had an oxirane oxygen concentration of 7.62% and a softening point of 84.4°C.

¹H-NMR charts of the compounds are shown in the figures.

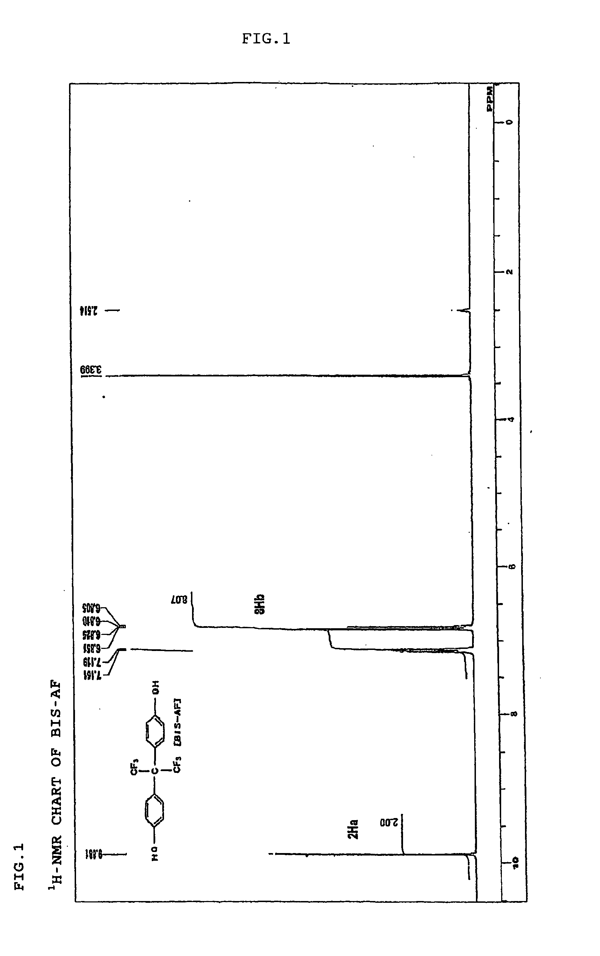

Fig. 1 is an ¹H-NMR chart of BIS-AF.

In the ¹H-NMR chart of BIS-AF, absorption by the protons of OHs at the both terminals is observed at 9. 9 ppm. A signal at around 7 ppm is attributed to protons on the benzene ring and signals at 3.4 and 2.5 ppm to solvent dimethyl sulfoxide-d₆. (Although chloroform-d₆ was used as a solvent in other NMR measurements, dimethyl sufoxide-d₆ was used because BIS-AF was insoluble in chloroform-d₆)

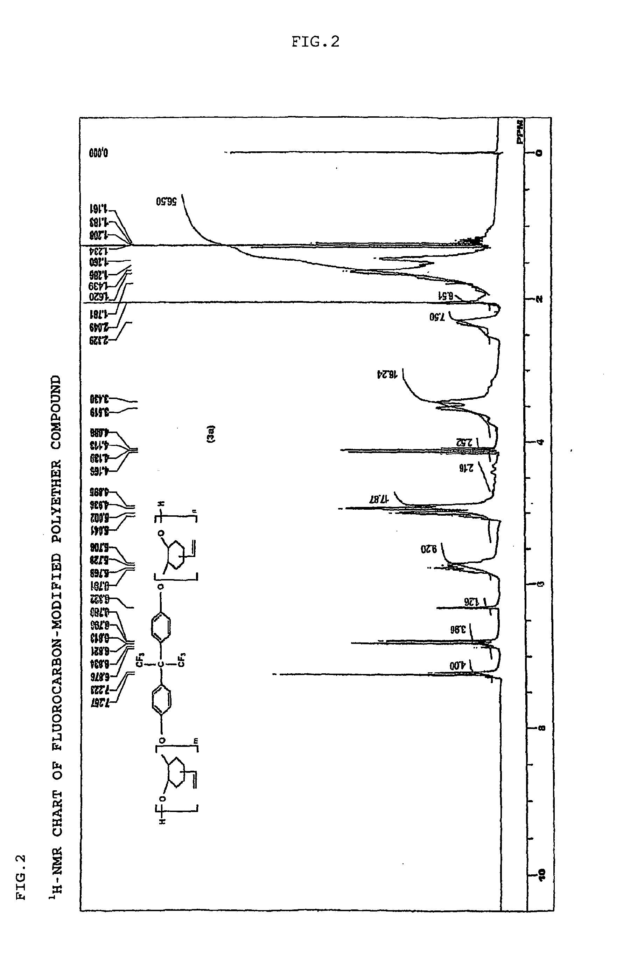

Fig. 2 is an ¹H-NMR chart of a fluorocarbon-modified polyether compound.

In the ¹H-NMR chart of the fluorocarbon-modified polyether compound, peaks at around 5.8 and 4.9 ppm are attributed to vinyl protons derived from 4-vinylcyclohexene-1-oxide and peaks at 3.5 to 3.4 ppm to ring opened epoxy protons derived from 4-vinylcyclohexene-1-oxide. Therefore, it can be confirmed that both terminals-OH protons seen in the ¹H-NMR chart of BIS-AF are lost by the reaction.

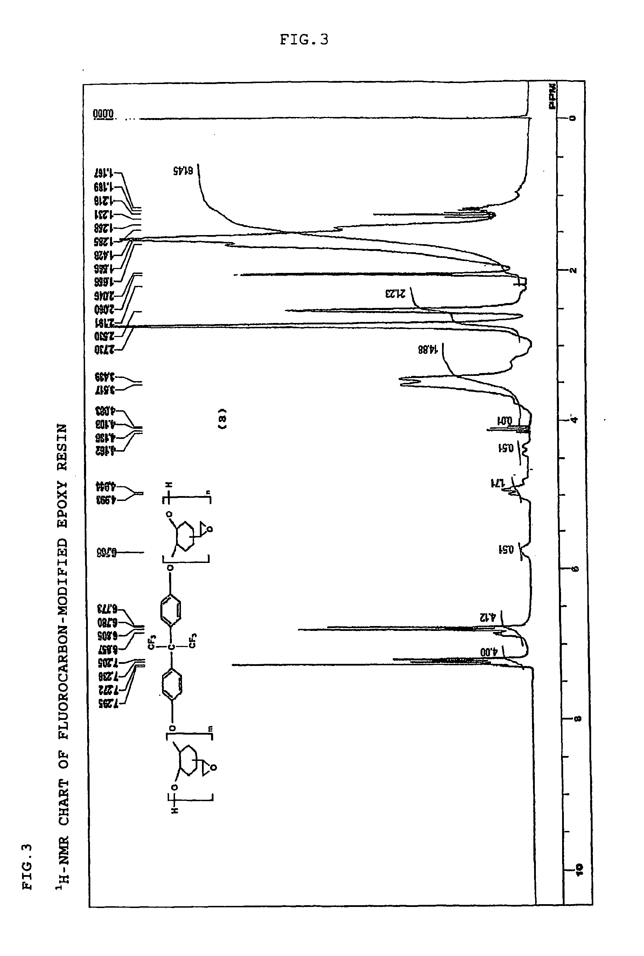

Fig. 3 is a ¹H-NMR chart of a fluorocarbon-modified epoxy resin. In the ¹H-NMR chart of the fluorocarbon-modified epoxy resin, peaks attributed to vinyl protons at around 5.7 and 4.9 ppm which are markedly seen in the fluorocarbon-modified polyether compound are rarely seen and peaks attributed to epoxy protons by the epoxidization of a vinyl moiety can be newly seen at around 2.7 and 2.5 pm.

### <Synthesis Example 2>

After 67.2 g (0.2 mol) of the above described BIS-AF, 372 g (3 mols) of 4-vinylcyclohexene-1-oxide, and 180 g of ethyl acetate were mixed and dissolved together, 57 g of a 15% ethyl acetate solution of BF₃·diethyl ether was added dropwise to the resulting solution at 40°C over 3 hours.

240 g of ethyl acetate was added to the obtained reaction crude solution, the resulting solution was rinsed with water, and the ethyl acetate layer was concentrated to obtain 420 g of a fluorocarbon-modified polyether compound.

Further, 400 g of this fluorocarbon-modified polyether compound was dissolved in 400 g of ethyl acetate and the solution was charged into a reactor, and then 218 g of peracetic acid (molar ratio to the vinyl group was 1.05) was added dropwise as 727 g of ethyl acetate solution to the resulting solution at 60°C over 3 hours. After the end of dropwise addition, the mixture was additionally aged at 60°C for 2 hours.

Thereafter, 600 g of ethyl acetate was added again, and the resulting mixture was rinsed with distilled water and the ethyl acetate layer was concentrated to obtain a fluorocarbon-modified epoxy resin having the following physical properties.

Chemical analysis confirmed that the resin had an oxirane oxygen concentration of 7.27% and a softening point of 76.6°C.

### <Synthesis Comparative Example 1>

134 g (1 mol) of trimethylolpropane was mixed with 1,860 g (15 mols) of 4-vinylcyclohexene-1-oxide, and 267 g of a 15% ethyl acetate solution of BF₃·diethyl ether was added dropwise to the resulting mixture at 50°C over 4 hours.

Ethyl acetate was added to the obtained reaction crude solution to rinse it and the ethyl acetate layer was concentrated to obtain 1,990 g of a polyether compound.

Further, 500 g of this polyether compound was dissolved in 250 g of ethyl acetate and the solution was charged into a reactor, and 286 g of peracetic acid (molar ratio to the vinyl group was 1.0) was added dropwise as 953 g of an ethyl acetate solution to the resulting solution at 50 °C over 4 hours. After the end of dropwise addition, the solution was additionally aged at 50°C for 2 hours. After acetic acid, ethyl acetate, and peracetic acid were removed, the solution was dissolved in ethyl acetate again and rinsed with distilled water, and then the ethyl acetate layer was concentrated to obtain an epoxy resin having the following physical properties.

Chemical analysis confirmed that the resin had an oxirane oxygen concentration of 9.41% and a softening pint of 68.4°C.

### <Synthesis Comparative Example 2>

An epoxy resin having the following physical properties was obtained in the same manner as in Synthesis Comparative Example 1 except that the charge amount of peracetic acid was changed to 172 g (molar ratio to the vinyl group was 0.6).

Chemical analysis confirmed that the epoxy resin had an oxirane oxygen concentration of 6.25% and a softening point of 58.6°C.

### <Synthesis Example 3>

After 46.4 g (0.2mol) of octafluoro-1-pentanol, 372 g (3mols) of 4-vinylcyclohexene-1-oxide, and 180 g of ethyl acetate were mixed and dissolved together, 57 g of a 15% ethyl acetate solution of BF₃·diethyl ether was added dropwise to the resulting solution at 40°C over 3 hours.

240 g of ethyl acetate was added to the obtained reaction crude solution, the resulting solution was rinsed with water, and the ethyl acetate layer was concentrated to obtain 420 g of a modified polyether compound.

Further, 400 g of this modified polyether compound was dissolved in 400 g of ethyl acetate and the solution was charged into a reactor, and then 229 g of peracetic acid (molar ratio to the vinyl group was 1.05) was added dropwise as 763 g of ethyl acetate solution to the resulting solution at 60°C over 3 hours. After the end of dropwise addition, the mixture was additionally aged at 60°C for 2 hours.

Thereafter, 600 g of ethyl acetate was added again, and the resulting mixture was rinsed with distilled water and the ethyl acetate layer was concentrated to obtain an epoxy resin having the following physical properties.

Chemical analysis confirmed that the resin had an oxirane oxygen concentration of 8.74% and a softening point of 59.0°C.

### Evaluation of epoxy resin and a cured product thereof

### (Evaluation of epoxy resin)

### Anti-blocking properties

### [Test conditions]

80 g (height of about 5 cm) of each of the epoxy resins obtained above was charged into a 250-ml polypropylene container (cylindrical, diameter of 6 cm) having a threaded cover, left standing in a drier set at 30°C and taken out to observe and evaluate the condition of the powder as shown in Table 1.

The epoxy resins were evaluated based on the following five-grade system.
5: when the container is tilted, the powder falls smoothly.
4: when the container is turned upside down, the powder falls.
3: when the container is turned upside down and shaken, the powder re-disperses and falls.
2: when the container is turned upside down and hit, the powder falls and partly melts and hardens.
1: the epoxy resin is hard and does not fall even by hitting.

**Table 1**

| Name of sample | after two hours | after 10 hours | after 24 hours | after 7 days |
|---|---|---|---|---|
| Synthesis Example 1 | 5 | 5 | 5 | 4 |
| Synthesis Example 2 | 5 | 5 | 4 | 3 |
| Synthesis Comparative Example 1 | 5 | 4 | 3 | 2 |
| Synthesis Comparative Example 2 | 3 | 2 | 1 | - |
| Synthesis Example 3 | 3 | 2 | 2 | 1 |

### <Examples 1 to 3, Comparative Examples 1 to 3>

### (Evaluation by cured product)

### [Preparation of an epoxy compound solution]

Each of the epoxy resins synthesized in the above Synthesis Examples and Synthesis Comparative Examples was dissolved in acetone together with a curing agent and a curing accelerator in a weight ratio of 3:1 (epoxy resin: acetone), and the required amount of the solution was cast into the following container to remove acetone.

A container having a width of 10 cm, a length of 20 cm, and a height of 3 cm was made from a released paper, and 60 g of the above solution was cast into the container.
Curing condition: 110°C x 2 hours + 150°C x 2 hours (substances shown in Table 2 below were used as the curing agent and the curing accelerator in amounts shown in the Table)

### [Measurement of Tg]

Tg was measured by DSC in accordance with JIS K 7121.
Temperature elevation rate: 5°C/min, 30°C to 380°C

### [Measurement of water absorption coefficient]

An increase in weight after 96 hours under the environment of 120°C and 95%RH was measured to calculate water absorption coefficient from the following expression (average value of 3 tests) (increase in weight after test/weight before test) x 100(%)

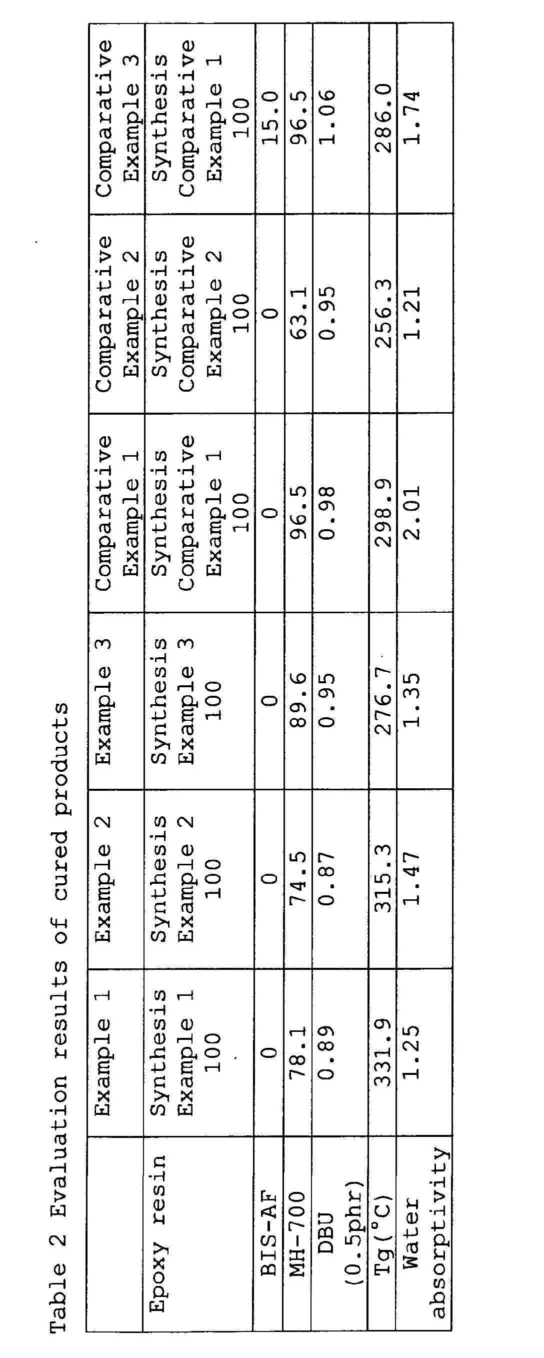

The unit of the blending amount of each substance in Table 2 is part by weight and substances represented by codes are shown below.
MH-700: methyl hexahydrophthalic anhydride (Rikacid MH-700 available from Shin Nippon Rika Co., Ltd.) (a curing agent)
DBU: 1,8-diazabicyclo(5,4,0)undecene-7 (a curing accelerator)

In Comparative Example 3 of Table 2, a cured product of a substance was obtained by mixing together 100 parts by weight of an epoxy compound not modified by a fluorocarbon obtained in Synthesis Comparative Example 1, 15.0 parts by weight of BIS-AF used in Synthesis Example 1, 96.5 parts by weight of MH-700 as a curing agent, and 1.06 part by weight of DBU as a curing accelerator.

As obvious from the results of Table 2, when the epoxy compound not modified by fluorocarbon is mixed with BIS-AF and the curing agent and the resulting mixture is cured, the obtained cured product cannot have high Tg and low water absorptivity as compared with a cured product obtained by mixing the fluorocarbon-modified epoxy resin of the present invention with a curing agent and the like and curing the resulting mixture.

### Industrial Applicability

As described hereinabove, since a cured product of the fluorocarbon-modified epoxy resin of the present invention by a curing agent has a high Tg and excellent heat resistance, water resistance, and weatherability and low water-absorbing property, it can be used as an excellent sealant for an LSI. Its performance can be adapted as a substitute for the epoxy resin to be impregnated into a coil in the prior art by freely adjusting the degree of polymerization according to the charge ratio of the compound. Further, the cured product can be used in a wide variety of fields such as a sealant for LED and semiconductors, and paintings.

## Claims

1. A fluorocarbon-modified epoxy resin prepared by epoxidizing vinyl groups of a fluorocarbon-modified polyether compound obtained by allowing the epoxy group of 4-vinylcyclohexene-1-oxide to react with an active hydrogen-containing group of a fluorocarbon compound having the active hydrogen-containing group.

2. A fluorocarbon-modified epoxy resin according to claim 1, wherein the fluorocarbon compound having an active hydrogen-containing group comprises a compound represented by the following formula (1), 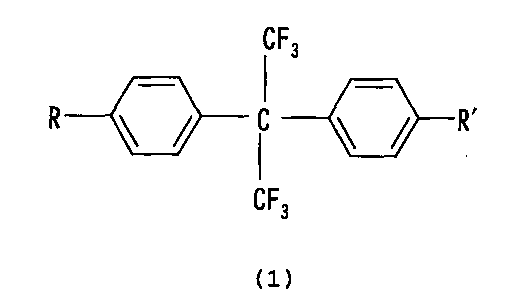 [In the formula (1), R and R' are each a group having an active hydrogen].

3. The fluorocarbon-modified epoxy resin according to claim 2, wherein the fluorocarbon compound having an active hydrogen-containing group represented by the formula (1) comprises BIS-AF[2,2-bis(4-hydroxyphenyl)-hexafluoropropane] or BIS-B-AF[2,2-bis(4-carboxyphenyl)-hexafluoropropane].

4. The fluorocarbon-modified epoxy resin according to any one of claims 1 to 3, wherein a Lewis acid is used as a catalyst for a reaction between 4-vinylcyclohexene-1-oxide and the fluorocarbon compound having an active hydrogen-containing group.

5. The fluorocarbon-modified epoxy resin according to claim 4, wherein the Lewis acid comprises a BF₃ complex.

6. A fluorocarbon-modified epoxy resin according to any one of claims 1 to 5, wherein an epoxidizing agent for use in epoxidizing the vinyl group of the fluorocarbon-modified polyether compound comprises an organic percarboxylic acid.

7. The fluorocarbon-modified epoxy resin according to claim 6, wherein a water content of the organic percarboxylic acid is 0.8% by weight or less.

8. The fluorocarbon-modified epoxy resin according to claim 6 or 7, wherein the organic percarboxylic acid comprises peracetic acid.

9. The fluorocarbon-modified epoxy resin according to claim 8, wherein peracetic acid comprises an ethyl acetate solution.

10. The fluorocarbon-modified epoxy resin according to any one of claims 1 to 9, wherein a content of oxirane oxygen is 1.0 to 10% by weight.
